# FASCICULE DE BREVET EUROPEEN

(11) **EP 2 974 854 B1**
(45) Date de publication et mention de la délivrance du brevet: **13.12.2017**
(21) Numéro de dépôt: 15175401.7
(22) Date de dépôt: 06.07.2015
(51) Int. Cl.: B29D 99/00, B64C 27/473, B29L 31/08

(54) **PROCEDE DE FABRICATION D'UN LONGERON D'UNE PALE, ET DE FABRICATION D'UNE PALE**
HERSTELLUNGSVERFAHREN EINES HOLMS EINES FLÜGELS, UND HERSTELLUNGSVERFAHREN EINES FLÜGELS
A METHOD OF FABRICATING A SPAR FOR A BLADE, AND A METHOD OF FABRICATING A BLADE

(30) Priorité: 18.07.2014 FR 1401624
(43) Date de publication de la demande: 20.01.2016
(73) Titulaire: Airbus Helicopters, 13725 Marignane Cedex (FR)
(72) Inventeur: GAFFIERO, Jacques, 75017 Paris (FR); RINALDI, Bénédicte, 75014 Paris (FR); AMARI, André, 60520 La Chapelle en Serval (FR)
(74) Mandataire: Pouillot, Laurent Pierre Paul

(56) Documents cités:
- DE-A1- 2 738 514
- GB-A- 2 092 543
- JP-A- S63 179 706

## Description

La présente invention concerne un procédé de fabrication d'un longeron d'une pale, et le procédé de fabrication de la pale.

Un giravion est muni d'au moins un moteur qui entraîne en rotation un rotor principal ayant pour but d'assurer la sustentation voire même la propulsion du giravion. Ce rotor principal comporte un moyeu portant une pluralité de pales.

Les pales comportent classiquement au moins un longeron s'étendant en envergure à partir du pied de la pale.

Lors de leur mouvement rotatif, les pales sont soumises à un torseur d'efforts. Par suite, les pales subissent un effort centrifuge ainsi que des efforts multiples et des moments de flexion et de torsion dus aux mouvements de la pale en battement et en traînée notamment.

Par suite, le longeron a notamment pour fonction de transmettre au moyeu les efforts subis par la pale, et en particulier la force centrifuge.

Un premier type de pale est équipé d'un longeron agencé au niveau du bord d'attaque de la pale. Ce longeron s'étend à partir du pied de la pale le long de l'envergure de la pale. On nomme ce type de longeron « longeron de bord d'attaque » par commodité dans la suite du texte.

Un tel longeron de bord d'attaque participe aussi à l'équilibrage statique en corde de cette pale.

De plus, le longeron de bord d'attaque tend à améliorer la résistance aux dommages provoqués suite à un impact entre le bord d'attaque et un objet.

Un deuxième type de pale est muni d'un longeron dénommé longeron réparti. Un tel longeron réparti consiste en un longeron de bord d'attaque qui est prolongé dans sa partie courante par deux parties disposées à plat respectivement sur l'intrados et l'extrados de la pale. Un longeron réparti comporte donc dans sa partie courante des sections en forme de C dans un plan transversal sensiblement parallèle l'axe de rotation du rotor.

Le longeron réparti comporte alors un bec massif de bord d'attaque. Ce bec est prolongé par une aile supérieure s'étendant au niveau de l'extrados de la pale et une aile inférieure s'étendant au niveau de l'intrados de la pale.

Outre les avantages d'un longeron de bord d'attaque, un longeron réparti tend à raidir la pale en battement.

De plus, un longeron réparti tend à optimiser la résistance de la pale en conférant à cette pale une résistance intéressante en cas d'endommagement local.

Toutefois, il est délicat d'attacher une pale équipée d'un longeron réparti sur un moyeu de rotor.

Pour être attaché à un moyeu, le longeron réparti d'une pale est par exemple enroulé au niveau de son emplanture autour d'au moins un axe vertical sensiblement parallèle à l'axe de rotation du rotor. La pale est alors fixée au rotor en insérant une broche s'étendant un tel axe vertical.

Toutefois, la fabrication d'un tel longeron réparti enroulé autour d'au moins une broche verticale peut être délicate.

Durant une première étape, un opérateur fabrique des rubans dénommés « roving ». Un tel ruban est réalisé en imprégnant dans de la résine des mèches de fibres de verre disposées cote à cote et calandrées suivant les dimensions du ruban désiré. Le ruban est assemblé avec un film séparateur, puis bobiné sur une bobine dénommée « galette ».

Le ruban de roving mis en oeuvre pour la fabrication des pales présente avant polymérisation une très bonne capacité de fluage. Cette capacité de fluage permet à un opérateur d'obtenir des évolutions de formes complexes par lissage manuel.

Durant une deuxième étape, un opérateur réalise des écheveaux élémentaires à l'aide de tronçons d'un ruban de roving. Chaque écheveau présente alors une pluralité de couches de rubans de roving.

Chaque écheveau élémentaire se présente sous la forme d'une longue boucle parfaitement enroulée autour d'un coin d'emplanture, l'écheveau ayant sensiblement des sections rectangulaires. Chaque écheveau a une forme de C dans un plan sensiblement orthogonal à l'axe de rotation du rotor. Ainsi, chaque écheveau comprend deux brins latéraux reliés par un fond accolé contre le coin d'emplanture. Un tel coin d'emplanture est une pièce allongée en matériaux composites qui est destinée à recevoir une douille de fixation.

Durant une troisième étape, un opérateur drape un revêtement sur une première demi-coquille d'un moule pour matérialiser l'intrados de la pale, et sur une deuxième demi-coquille du moule pour matérialiser l'extrados de la pale.

Les écheveaux sont alors présentés dans les demi-coquilles pour être lissés. La portion des écheveaux enroulée autour des douilles d'attache des écheveaux n'est pratiquement pas reprise par l'opérateur. Par contre, les deux brins des écheveaux sont manoeuvrés par l'opérateur pour être disposés suivant des positions préétablies le long de l'envergure de la pale.

Enfin, les écheveaux sont travaillés manuellement durant une opération de lissage afin de faire fluer la matière conformément aux évolutions de sections prédéfinies.

Les opérateurs utilisent, à des références de pales identifiées, des gabarits qui matérialisent la section de longeron à respecter afin de faire fluer les brins des écheveaux progressivement et le plus régulièrement possible.

La réalisation de la troisième étape s'avère délicate.

En effet, les formes du longeron sont relativement simples au niveau de la douille de fixation et de la partie courante de la pale. De manière simplifiée, les écheveaux s'étendent sensiblement verticalement au niveau de la douille de fixation et sensiblement horizontalement au niveau de l'intrados et de l'extrados. Par contre, la trajectoire suivie par chaque écheveau entre ces deux zones extrémales est complexe. Cette trajectoire est notamment vrillée dans une zone complexe dénommée « zone de raccordement ».

Il est de plus malaisé de disposer à plat sur l'extrados et l'intrados de la pale les fibres des écheveaux provenant de la section vrillée du longeron réparti.

Le vrillage dans la zone de raccordement peut alors conduire à une faible reproductivité de la forme, ainsi qu'une faible reproductivité des caractéristiques mécaniques et vibratoires d'une pale à une autre.

De plus, si des éléments de remplissage doivent être agencés dans la pale, ces éléments de remplissage seront de forme complexe et varieront d'une pale à l'autre puisque le vrillage du longeron n'est pas reproduit à l'identique. La fabrication des pales peut alors difficilement être automatisée.

Le document FR 2 918 347 propose une douille de fixation permettant un enroulement du longeron réparti non pas autour d'un axe vertical mais autour d'un axe horizontal.

Le document JP S63-179706 présente une pale munie de deux douilles de fixation. La pale comporte un longeron pourvu d'un caisson comprenant une pointe arrondie. Ce caisson est alors prolongé par deux bras enroulées chacun autour d'une douille de fixation.

Les documents FR 2 321 997, FR 2 030 036, EP 1 035 963, et FR 993491 sont éloignés de la problématique de l'invention.

Les document DE 2738514 et GB 2092543 sont aussi connus.

Le document FR 2 321 997 dévoile un procédé de fabrication d'articles de section non circulaire par bobinage de filaments continus.

Ce procédé met en oeuvre un mandrin immobile contenant une enveloppe élastique. Le mandrin est gonflé afin d'atteindre une forme circulaire puis est mis en rotation. Des filaments continus sont alors bobinés autour du mandrin et enrobés d'une résine durcissable.

Le mandrin est ensuite dégonflé pour transformer le bobinage en une gaine déformable.

La gaine déformable est alors placée dans la cavité d'un moule. Un opérateur met ensuite en surpression l'intérieur de la gaine pour que le bobinage épouse la forme du moule. Cet opérateur provoque finalement le durcissement de la résine pour transformer la gaine en une structure creuse rigide.

Ce procédé de bobinage de fibres continues autour d'un mandrin immobile ne paraît pas adapté à un longeron réparti de pale.

Selon le document FR 2 030 036, un opérateur forme par bobinage un élément cylindrique qui constituera le revêtement extérieur de la pale. Cet élément cylindrique est ensuite subdivisé en deux sous-ensembles disposés chacun dans un moule.

Par ailleurs, le longeron de la pale est réalisé par bobinage.

Ce longeron comporte un premier bloc de couches de fibres présentant une angulation de 45° avec l'axe longitudinal de la pale, puis un deuxième bloc de couches de fibres présentant une angulation de 30° avec cet axe longitudinal, et enfin un troisième bloc de couches de fibres présentant une angulation de 15° avec l'axe longitudinal.

Le longeron débouchant sur l'extérieur au niveau du pied de la pale par une ouverture, une attache bobinée est coincée dans cette ouverture. Ensuite, le longeron est inséré entre les deux moules dans lesquels sont disposés les deux sous-ensembles du revêtement extérieur de la pale.

Ce procédé de fabrication est efficace mais paraît difficilement adapté à un longeron réparti. De plus, de multiples étapes sont mises en oeuvre.

Le document EP 1 035 963 décrit un système de commande pour un dispositif de placement de fibres. Ce document EP 1 035 963 ne fournit néanmoins aucun enseignement relatif à un longeron d'une pale.

La méthode du placement de fibres est une méthode alternative au bobinage d'un filament continu.

Le placement de fibres est un procédé de dépose de fibres, rubans, mèches ou autres renforts similaires, secs ou pré-imprégnés de résine, sur des surfaces de formes diverses. Ce placement est réalisé en mettant en oeuvre un dispositif pourvu d'une tête de placement mobile. La tête de placement assure donc le positionnement du produit utilisé sur une surface par contact mécanique direct sur cette surface. A cet effet, la tête de placement est animée par un système de déplacement, de type robot ou portique de positionnement, dont les degrés de liberté sont asservis suivant la géométrie de la surface à couvrir.

Le procédé de placement de fibres permet donc notamment de réaliser des surfaces de grandes dimensions et de faibles épaisseurs, dans les limites de l'encombrement de la tête de placement.

Notamment, le procédé de placement de fibres permet de réaliser automatiquement des opérations de dépose de fibres discontinues par le biais d'opérations d'amorçage, de dépose, et de découpe.

Le document FR 2 993 491 dévoile une machine de placement de fibres.

On note que le placement d'un ruban de roving par le biais d'un système de placement peut être difficile. En effet, la matière déposée par les systèmes de placement sous forme de rubans tend à être visqueuse. Cette méthode offre alors peu de latitude à un opérateur pour lisser le ruban, ce qui peut paraître incompatible avec la réalisation d'un longeron.

En outre, l'encombrement des volumes balayés par une tête de placement ne parait pas compatible avec les volumes des demi-coquilles utilisées lors de la fabrication d'une pale selon le procédé décrit précédemment.

Enfin, un longeron présente des épaisseurs importantes contrairement aux pièces généralement fabriquées par placement de fibres.

De plus, un longeron présente selon des envergures des sections de nature très diverses Dès lors, la fabrication d'un longeron en appliquant un procédé de placement de fibres paraît difficile à réaliser.

L'invention a alors pour objet un procédé de fabrication d'un longeron d'une pale visant à fabriquer un longeron réparti d'une pale à l'aide d'un matériau composite.

L'invention concerne alors un procédé de fabrication d'un longeron d'une pale à l'aide de rubans en matériaux composites, ledit longeron comportant au moins un arrangement, chaque arrangement étant à enrouler autour d'un axe d'emplanture, au cours duquel :
- durant une étape de préparation, on définit un mandrin mâle par arrangement à fabriquer, chaque mandrin comprenant une surface courante d'intrados et une surface courante d'extrados en forme de U, chaque surface courante comprenant :
   ∘ une zone d'emplanture munie d'une paroi d'emplanture en forme de C formant un fond de ladite forme de U,
   ∘ une zone de raccordement présentant deux parois de raccordement vrillées raccordées respectivement à deux extrémités dudit fond,
   ∘ une zone courante présentant deux parois courantes raccordées respectivement aux deux parois de raccordement,
- durant une étape de fabrication, on subdivise chaque arrangement en un sous-ensemble d'intrados et un sous-ensemble d'extrados comprenant chacun au moins un écheveau, chaque écheveau comprenant une pluralité de tronçons de ruban en forme de U empilés les uns sur les autres,
- durant ladite étape de fabrication, on fabrique ledit sous ensemble d'intrados et ledit sous ensemble d'extrados d'un arrangement sur un même mandrin adapté à cet arrangement et en dehors d'un moule de fabrication de ladite pale, ledit sous ensemble d'intrados et ledit sous ensemble d'extrados d'un arrangement étant fabriqués en empilant des tronçons de ruban sur ledit mandrin par une méthode de placement de fibres à l'aide d'une tête de placement, ladite tête de placement enroulant chaque tronçon de ruban du sous-ensemble d'intrados autour d'un axe d'emplanture en déposant ledit tronçon par-dessus la surface courante d'intrados, ladite tête de placement enroulant chaque tronçon de ruban du sous-ensemble d'extrados autour d'un axe d'emplanture en déposant ledit tronçon sur la surface courante d'extrados,
- durant une étape de chauffage, on chauffe chaque arrangement sur son mandrin.

Ainsi, si les tronçons de ruban comportent une résine thermodurcissable, on polymérise le longeron en le chauffant. Si les tronçons de ruban comportent une résine thermoplastique, on consolide le longeron en le chauffant.

Ce procédé propose donc de définir un mandrin pour chaque type d'arrangement.

Ce mandrin définit une surface courante d'intrados et une surface courante d'extrados. Chaque arrangement est ainsi subdivisé en un sous-ensemble d'intrados à déposer sur une surface courante d'intrados, et un sous-ensemble d'extrados à déposer sur une surface courante d'extrados.

Dès lors, ce procédé propose de réaliser un longeron en déposant des tronçons de ruban en forme de U sur un mandrin afin de fabriquer les différents écheveaux. Un tel ruban peut être un ruban à faible pégosité muni de fibres imprégnées par voie dite « voie solvant ».

Ce procédé définit ainsi des trajectoires que peut suivre une tête de placement de fibres pour obtenir un longeron présentant des sections diverses. En particulier, le procédé permet de réaliser un longeron muni d'un axe d'emplanture dit « axe vertical » sensiblement orthogonal au plan d'extension en envergure dudit longeron. Un tel axe d'emplanture est alors sensiblement parallèle à l'axe de rotation du rotor équipé de la pale muni de ce longeron.

Dès lors, il devient possible de déposer des tronçons de ruban à l'aide d'une tète de placement montée sur le bras d'un robot.

Ce bras peut être translaté sur un bâti longitudinal parallèlement à un mandrin. De plus la tête est aussi inclinable par rapport au bras pour pouvoir faire le tour de la zone d'emplanture. Ainsi, la tête de placement présente six degrés de liberté ce qui lui permet de déposer chaque tronçon de ruban le long d'une trajectoire en U.

La dépose des tronçons de ruban est donc réalisée intégralement et automatiquement, sur un mandrin, à l'extérieur du moule d'une pale, contrairement à certaines méthodes manuelles actuelles.

Par suite, les longerons obtenus par ce procédé peuvent alors être sensiblement identiques les uns aux autres.

Ce procédé présente aussi l'avantage de pouvoir fabriquer un longeron massif au niveau de son bord d'attaque, à savoir un longeron présentant une épaisseur importante. Pourtant, la méthode de placement de fibres ne parait pas adaptée à une telle fabrication.

En effet, on verra par la suite que le mandrin permet d'obtenir des écheveaux susceptibles de donner naissance à un bord d'attaque massif.

En outre, ce procédé permet notamment de fabriquer un longeron réparti qui est creux dans sa partie courante.

De plus, ce procédé permet aussi de réaliser un longeron enroulé autour de deux goupilles éventuellement verticales ce qui parait incompatible avec le cheminement d'une tête de placement.

En effet, le procédé permet de réaliser un premier arrangement sur un premier mandrin, et un deuxième arrangement sur un deuxième mandrin. Les mandrins sont alors accolés l'un à l'autre préalablement à l'étape de chauffage des arrangements.

La dépose des tronçons de ruban est alors effectuée en deux passes respectivement sur deux mandrins différents.

Ce procédé peut de plus comporter une ou plusieurs des caractéristiques qui suivent.

Ainsi, les parois de raccordement d'un mandrin forment conjointement une forme de losange en <> vue selon une coupe en corde du mandrin pour faciliter la dépose desdits tronçons.

En effet, cette forme permet à une tête de placement de poser les tronçons de ruban sans risque d'interférence avec une structure annexe.

En outre, durant ladite étape de fabrication, ladite tête de placement enroulant chaque tronçon de ruban du sous-ensemble d'intrados autour d'un axe d'emplanture en déposant ledit tronçon au dessus d'une première paroi courante de la surface courante d'intrados, d'une première paroi de raccordement de la surface courante d'intrados, de la paroi d'emplanture, d'une deuxième paroi de raccordement de la surface courante d'intrados, et d'une deuxième paroi courante de la surface courante d'intrados, ladite tête de placement enroulant chaque tronçon de ruban du sous-ensemble d'extrados autour d'un axe d'emplanture en déposant ledit tronçon au dessus d'une première paroi courante de la surface courante d'extrados, d'une première paroi de raccordement de la surface courante d'extrados, de la paroi d'emplanture, d'une deuxième paroi de raccordement de la surface courante d'extrados, et d'une deuxième paroi courante de la surface courante d'extrados.

Les trajectoires à respecter peuvent ainsi être suivies par une tête de placement de fibres.

De plus, ces trajectoires permettent notamment d'obtenir des écheveaux munis de sections rectangulaires au niveau de la zone d'emplanture. Les écheveaux sont ensuite pivotés au niveau de la zone de raccordement puis s'épanouissent au niveau de la zone courante.

L'évolution des sections des écheveaux peut être réalisée malgré un fluage de la matière quasi inexistant avec certains types de rubans composites.

L'épanouissement se fait par distribution préprogrammée de la direction d'application des rubans dans la zone courante. Par exemple, les tronçons de ruban sont décalés transversalement en corde alternativement « à gauche » et « à droite » par rapport à une direction médiane, ce qui permet d'obtenir les évolutions de sections souhaitées.

Par ailleurs, au moins un mandrin peut être un mandrin amovible formé à l'aide d'un outillage représentant un volume interne d'un longeron, ledit mandrin étant enlevé suite à ladite étape de chauffage.

La dépose des tronçons de ruban est alors effectuée sur un mandrin mâle représentatif des volumes internes entourés par le longeron.

Alternativement, au moins un mandrin est un mandrin inamovible formé d'une douille de fixation, d'un coin d'emplanture entourant ladite douille de fixation et d'un matériau de remplissage d'une pale.

Le volume interne sur lequel est effectuée la dépose des tronçons de ruban est alors constitué des pièces élémentaires réelles qui feront partie de la pale. Ces pièces élémentaires incluent par exemple une douille de fixation complète, un coin d'emplanture qui prolonge la douille, et un matériau de remplissage « léger » s'étendant en envergure à partir du coin d'emplanture. Un tel matériau de remplissage peut être une mousse de type polyuréthane par exemple.

Par ailleurs, on peut agencer le mandrin sur un outillage solidaire d'un vireur, ledit vireur engendrant une rotation du mandrin durant l'étape de fabrication.

Par exemple, le mandrin est fixé sur un vireur par un outillage. Cet outillage peut permettre de tourner le mandrin autour de son axe de symétrie longitudinal pour recouvrir soit sa surface courante d'intrados soit sa surface courante d'extrados.

En outre, le vireur peut effectuer une rotation lors de l'opération de dépose de tronçons de ruban pour faciliter l'évolution de la tête de placement, notamment en tournant autour de la zone d'emplanture.

Favorablement et dans le cadre d'un axe d'emplanture de type « axe vertical », l'axe de rotation du vireur passe par l'axe vertical de la zone d'emplanture, et reste parallèle avec l'axe de symétrie longitudinal du mandrin.

Selon un autre aspect, durant l'étape de fabrication, on fabrique lesdits écheveaux l'un après l'autre, en disposant tous les tronçons d'un écheveau sur un mandrin avant de placer les tronçons d'un autre écheveau.

Par ailleurs, les sections des écheveaux sont assimilables à des rectangles dans la zone d'emplanture. On peut faire évoluer ces sections en surfaces dégressives afin d'adapter le niveau de contraintes appliquées le long de l'envergure.

Selon une première alternative, la dégressivité peut être effectuée par réduction de la largeur des rubans permise par la subdivision du ruban.

Ainsi, au moins un tronçon de ruban d'un sous ensemble recouvre dans la zone courante un autre tronçon du sous-ensemble selon une largeur en corde qui décroit en s'éloignant dudit axe d'emplanture.

Selon une deuxième alternative, la dégressivité peut être effectuée suivant l'envergure de la pale par découpe de sections de ruban suivant un rayon.

Ainsi, au moins un tronçon de ruban d'un sous ensemble s'étendant en envergure à partir dudit axe d'emplanture sur une longueur dite « première longueur », au moins un autre tronçon s'étend en envergure à partir dudit axe d'emplanture sur une longueur dite « deuxième longueur » différente de la première longueur pour conférer une épaisseur dégressive au sous-ensemble.

La première alternative et la deuxième alternative peuvent être combinées.

Par ailleurs, le longeron comportant un arrangement dit « arrangement de bord de fuite », on définit un mandrin dit « mandrin de bord de fuite » muni d'une surface courante d'intrados et d'une surface courante d'extrados séparées l'une de l'autre verticalement.

En outre, le longeron peut comporter un arrangement dit « arrangement de bord d'attaque », on définit un mandrin dit « mandrin de bord d'attaque » muni d'une surface courante d'intrados et d'une surface courante d'extrados se rejoignant en formant une pointe.

Suite à la dépose des tronçons de ruban, le mandrin de bord d'attaque et le mandrin de bord de fuite peuvent être fixés l'un à l'autre préalablement au chauffage desdits tronçons.

A la suite de l'étape de chauffage, on obtient un longeron unitaire muni de l'arrangement de bord d'attaque et de l'arrangement de bord de fuite.

Par ailleurs, le mandrin de bord d'attaque présente par exemple :
- une surface courante d'extrados munie transversalement d'une zone externe d'extrados et d'une zone interne d'extrados séparées verticalement par une marche d'extrados,
- une surface courante d'intrados munie transversalement d'une zone externe d'intrados et d'une zone interne d'intrados séparées verticalement par une marche d'intrados, la zone interne d'intrados et la zone interne d'extrados se rejoignant pour former ladite pointe.

Un tel mandrin de bord d'attaque permet d'obtenir un longeron massif au niveau du bord d'attaque d'une pale. En effet, ce mandrin de bord d'attaque permet l'empilement d'écheveaux conférant au longeron une épaisseur importante.

Par suite, on peut alterner la dépose des tronçons d'un écheveau du sous-ensemble d'intrados et la dépose des tronçons d'un écheveau du sous-ensemble d'extrados en accolant au niveau de ladite pointe un brin d'un écheveau contre un brin de l'écheveau précédemment déposé pour former un épi de bord d'attaque.

On appelle « brin » un segment d'un écheveau.

Plus particulièrement, durant l'étape de fabrication :
- on forme un premier écheveau du sous-ensemble d'extrados en agençant une pluralité de tronçons sur ledit mandrin à l'aide de ladite tête de placement, chaque tronçon du premier écheveau comportant successivement un premier brin ainsi qu'un brin central et un deuxième brin, le premier brin étant déposé sur la zone externe d'extrados et une zone de raccordement d'extrados, le brin central étant déposé sur une zone d'emplanture d'extrados, et le deuxième brin étant déposé sur la zone de raccordement d'extrados et la zone interne d'extrados, une portion d'extrados de la zone externe d'extrados débouchant sur la marche d'extrados n'étant pas recouverte par le premier brin, le deuxième brin saillant transversalement de la zone interne d'extrados,
- on forme un deuxième écheveau du sous-ensemble d'intrados en agençant une pluralité de tronçons sur ledit mandrin à l'aide de ladite tête de placement, chaque tronçon du deuxième écheveau comportant successivement un troisième brin ainsi qu'un brin central et un quatrième brin, le troisième brin étant déposé sur la zone externe d'intrados et la une zone de raccordement d'intrados, le brin central étant déposé sur une zone d'emplanture d'intrados, le quatrième brin étant déposé sur la zone de raccordement d'intrados et la zone interne d'intrados, une portion d'intrados de la zone externe d'intrados débouchant sur la marche d'intrados n'étant pas recouverte par le troisième brin, le quatrième saillant transversalement de la zone interne d'intrados pour être en appui contre un bord du premier brin,
- on forme un troisième écheveau du sous-ensemble d'extrados en agençant une pluralité de tronçons sur ledit mandrin à l'aide de ladite tête de placement, chaque tronçon du troisième écheveau comportant successivement un cinquième brin ainsi qu'un brin central et un sixième brin, le cinquième brin étant déposé conjointement sur ladite portion d'extrados et partiellement sur le deuxième brin dans la partie courante puis recouvrant la zone de raccordement d'extrados dans la zone courante, le brin central étant déposé sur la zone d'emplanture d'extrados, et le sixième brin étant déposé sur la zone de raccordement d'extrados puis dans la zone courante sur le deuxième brin et sur un bord du quatrième brin, le sixième brin saillant transversalement du quatrième brin,
- on forme un quatrième écheveau du sous-ensemble d'intrados en agençant une pluralité de tronçons sur ledit mandrin à l'aide de ladite tête de placement, chaque tronçon du quatrième écheveau comportant successivement un septième brin ainsi qu'un brin central et un huitième brin, le septième brin étant déposé conjointement sur ladite portion d'intrados et partiellement sur le quatrième brin dans la partie courante puis recouvrant la zone de raccordement d'intrados dans la zone courante, le brin central étant déposé sur la zone d'emplanture d'intrados, et le huitième brin étant déposé sur la zone de raccordement d'intrados puis dans la zone courante sur le quatrième brin et contre un bord du sixième brin.

Le procédé selon l'invention permet donc de réaliser des écheveaux disposés en épis superposés en bord d'attaque de façon à « massiver » à la demande cette partie du longeron.

Un conformage-lissage manuel léger peut être envisagé avant chauffage pour parfaire la forme du longeron, en écrasant localement des sections rectangulaires des brins pour leur donner la forme finale souhaitée.

Eventuellement, la portion du premier écheveau qui est déposée sur ladite zone interne d'extrados affleure la zone externe d'extrados, et la portion du deuxième écheveau qui est déposée sur ladite zone interne d'intrados affleure la zone externe d'intrados.

Par ailleurs, l'invention vise un procédé de fabrication d'une pale, caractérisé en ce qu'on :
- fabrique un longeron en appliquant le procédé précédemment décrit,
- fabrique un moule de la pale,
- on agence ledit longeron dans ledit moule,
- on agence ledit moule dans un moyen de chauffage pour chauffer ladite pale.

l'invention concerne de plus une pale munie d'au moins une douille de fixation et d'un longeron, ce longeron comportant un arrangement enroulé autour de cette douille de fixation, cet arrangement comprenant un sous-ensemble d'intrados et un sous-ensemble d'extrados, cet arrangement s'étendant en envergure en comprenant successivement une zone d'emplanture au niveau de la douille de fixation, une zone de raccordement puis une zone courante.

Au moins une section dite « section de raccordement » dudit arrangement dans la zone de raccordement a une forme de losange en <>, ledit sous-ensemble d'intrados ayant une forme de V et ledit sous-ensemble d'extrados ayant une forme V inversé dans ladite section de raccordement.

Le terme inversé est à considérer selon le regard d'un observateur observant le longeron selon son envergure, le sous-ensemble d'extrados étant situé à l'aplomb du sous-ensemble d'intrados.

Cette particularité permet de réaliser la pale en utilisant le procédé de placement de fibres décrit précédemment.

La pale peut alors comporter un arrangement de bord d'attaque et un arrangement de bord de fuite. Chaque arrangement peut posséder une section de raccordement en forme de losange . Toutefois, un seul arrangement peut présenter une telle forme.

Par ailleurs, ledit axe d'emplanture étant un axe vertical sensiblement orthogonal à un plan d'extension en envergure du longeron, chaque section dite « section d'emplanture » dudit arrangement dans la zone d'emplanture peut comporter au moins une tranche s'étendant en élévation selon sa longueur.

A l'inverse, chaque section dite « section courante » dudit arrangement dans la zone courante comporte au moins une tranche s'étendant transversalement selon sa longueur.

Chaque tranche s'étend selon une longueur et une largeur. La longueur d'une tranche d'un longeron représente alors la plus grande dimension de cette tranche.

En outre, au moins une section d'un arrangement de bord d'attaque peut présenter une forme en C dans la zone courante, un arrangement de bord de fuite prolongeant cette forme en C au niveau de l'extrados et de l'intrados de la pale

L'invention et ses avantages apparaîtront avec plus de détails dans le cadre de la description qui suit avec des exemples donnés à titre illustratif en référence aux figures annexées qui représentent :
- la figure 1, une vue de dessus et en coupe d'une pale muni d'un axe d'emplanture vertical obtenue en appliquant le procédé selon l'invention,
- la figure 2, une vue schématique d'un système de placement de fibres selon l'invention,
- la figure 3, une vue d'un mandrin de bord de fuite porté par un outillage,
- la figure 4, une vue d'un mandrin de bord d'attaque
- la figure 5, une coupe présentant une section d'un arrangement de bord d'attaque,
- la figure 6, une vue d'un arrangement de bord d'attaque,
- la figure 7, une vue schématique d'un mandrin inamovible,
- la figure 8, une vue illustrant un tronçon de ruban ayant une largeur décroissante,
- la figure 9, une vue de deux tronçons de ruban ayant des longueurs différentes,
- la figure 10, une vue illustrant des tronçons de ruban décalés en corde,
- la figure 11, une vue explicitant la fabrication d'une pale, et
- la figure 12, une vue de dessus et en coupe d'une pale muni d'un axe d'emplanture horizontal obtenue en appliquant le procédé selon l'invention.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversalement » est relatif à toute direction parallèle à la deuxième direction Y. La corde de la pale fabriquée s'étend transversalement alors que l'envergure de la pale s'étend longitudinalement.

Enfin, la troisième direction Z est dite en élévation. L'expression « en élévation » est relative à toute direction parallèle à la troisième direction Z.

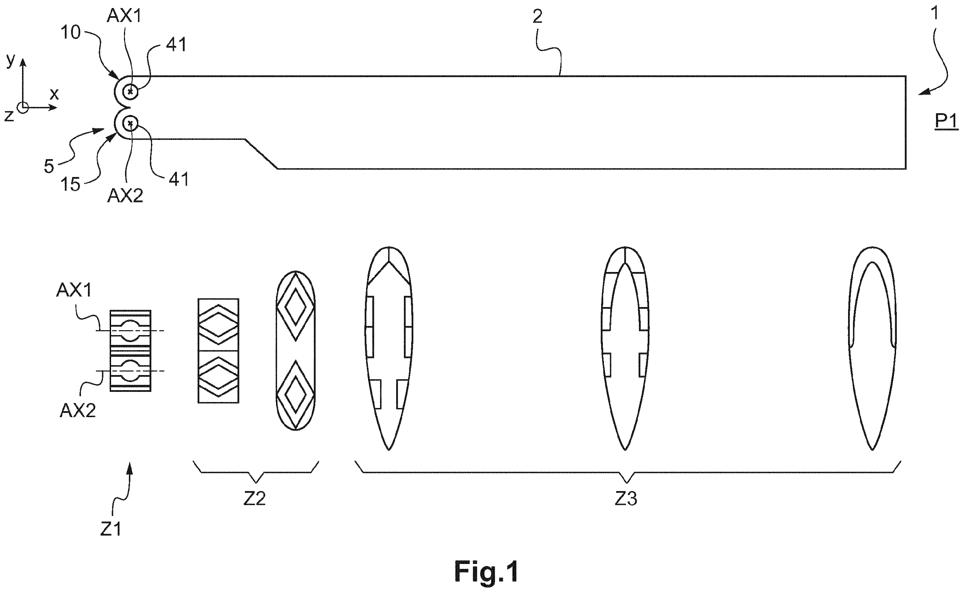

La figure 1 présente une pale 1 fabriquée en appliquant le procédé selon l'invention.

Cette pale 1 comporte un revêtement extérieur 2 dans lequel s'étend un longeron 5.

Ce longeron 5 s'étend donc longitudinalement le long de l'envergure de la pale 1 dans un plan d'extension en envergure P1, et transversalement selon des cordes de la pale 1.

Chaque section de la pale 1 est alors une section transversale parallèle à la deuxième direction Y et à la troisième direction Z.

Ce longeron 5 entoure au moins une douille de fixation. Ainsi, le longeron 5 comporte un arrangement par douille de fixation. Chaque arrangement est alors enroulé autour d'un axe d'emplanture AX1, AX2 de symétrie d'une douille de fixation. Selon la réalisation de la figure 1, un tel axe d'emplanture est un axe vertical sensiblement orthogonal au plan d'extension en envergure P1.

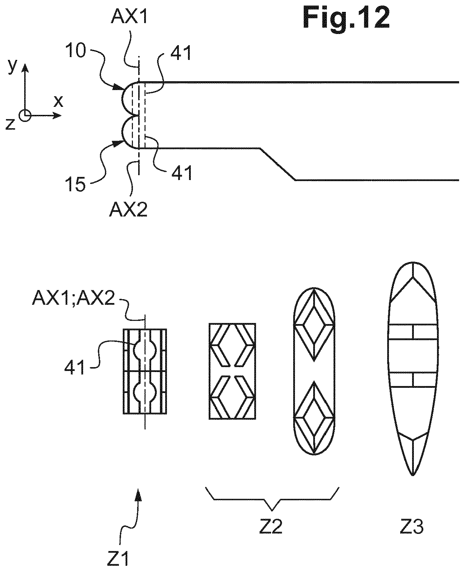

Toutefois et en référence à la figure 12, l'axe d'emplanture peut être un axe horizontal sensiblement inscrit dans le plan d'emplanture P1.

En référence à la figure 1, la pale peut comporter deux douilles de fixation 41. Dès lors, le longeron 5 comporte un arrangement dénommé « arrangement de bord d'attaque 10 » qui entoure la douille de fixation la plus proche du bord d'attaque de la pale en étant enroulé autour d'un premier axe d'emplanture AX1. De plus, le longeron 5 comprend un arrangement dénommé « arrangement de bord de fuite 15 » qui entoure la douille de fixation la plus proche du bord de fuite de la pale en étant enroulé autour d'un deuxième axe d'emplanture AX2.

La figure 1 présente de plus des sections de la pale dans une zone d'emplanture Z1, une zone de raccordement Z2, et une zone courante Z3.

Chaque section d'un arrangement prend sensiblement la forme de deux rectangles dans la zone d'emplanture Z1. La longueur de chaque rectangle s'étend sensiblement parallèlement à l'axe d'emplanture correspondant.

Par contre, chaque section d'un arrangement prend sensiblement une forme en <> de losange dans la zone de raccordement Z2, cette forme en <> s'aplatissant en s'éloignant de la zone d'emplanture.

Enfin, chaque section de l'arrangement de bord d'attaque 10 tend à présenter une forme en C dans la zone courante Z3, l'arrangement de bord de fuite 15 prolongeant cette forme en C au niveau de l'extrados et de l'intrados de la pale selon la réalisation de la figure 1.

Un tel longeron 5 et une telle pale 1 peuvent être fabriqués de manière automatisée en appliquant le procédé selon l'invention.

Ce procédé vise à fabriquer le longeron à partir d'au moins un ruban de matériaux composites en utilisant une tête de placement de fibres.

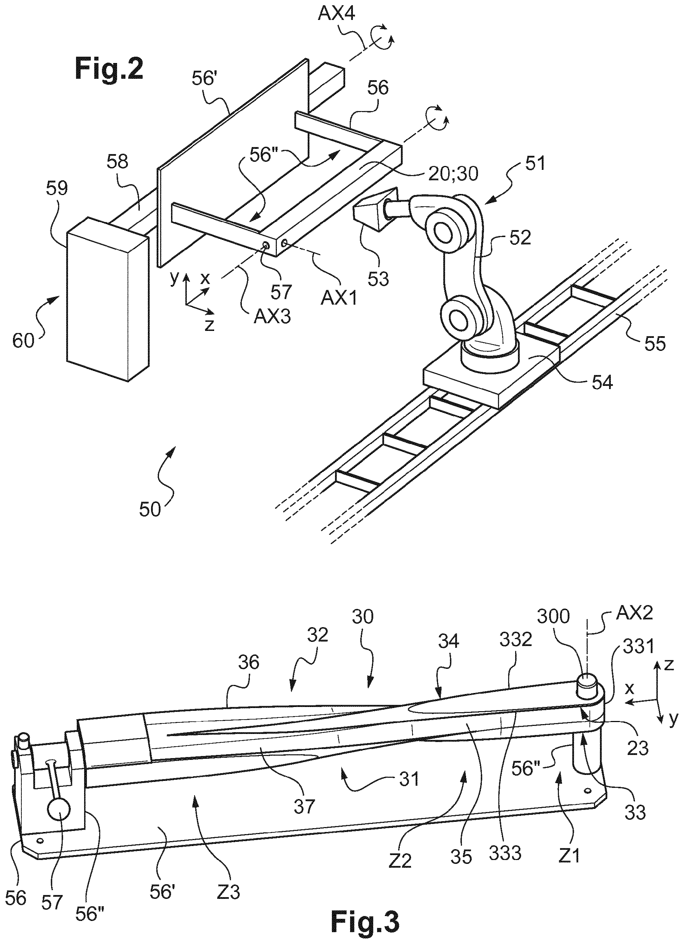

En référence à la figure 2, ce procédé met en oeuvre un système muni d'un robot 51. Le robot 51 est muni d'un bras articulé 52 monté sur un chariot 54 coulissant sur des rails 55. De plus, le robot 51 comprend une tête de placement 53 permettant de déposer des tronçons d'un ruban en matériaux composites sur un support. Un tel tronçon est dénommé « tronçon de ruban » par commodité.

La tête de placement comporte alors six degrés de liberté, à savoir trois degrés de liberté en translation et trois degrés de liberté en rotation.

De plus, le système peut comporter un mandrin 20, 30 par arrangement.

Pour fabriquer un longeron selon la figure 1, le système comporte alors un mandrin de bord d'attaque 20 permettant la dépose de tronçons de ruban pour matérialiser l'arrangement de bord d'attaque 10. De plus, le système comporte alors un mandrin de bord de fuite 30 permettant la dépose de tronçons de ruban pour matérialiser l'arrangement de bord de fuite 15.

Pour déposer des tronçons de ruban en matériaux composite sur un mandrin, ce mandrin peut être agencé sur un outillage 56. Un tel outillage peut comporter un moyen d'orientation 57 pour faire tourner le mandrin autour de son axe longitudinal AX3 de symétrie. Cet axe longitudinal AX3 peut traverser l'axe du mandrin matérialisant l'axe d'emplanture AX1 autour duquel est enroulé l'arrangement concerné.

Par exemple, l'outillage comporte une plaque plane 56' solidaire de deux tiges 56" aptes à porter le mandrin.

De plus, cet outillage 56 peut être porté par un vireur 60. Le vireur 60 peut comporter un arbre 58 solidaire de l'outillage 56, et un moteur 59 asservi apte à mettre en rotation l'arbre autour de l'axe de rotation AX4. Cet axe de rotation AX4 est favorablement parallèle à l'axe longitudinal AX3 du mandrin porté.

Le vireur permet alors d'incliner le mandrin par rapport à la tête de placement pour faciliter la dépose de tronçons de ruban.

Le moteur 59 et le robot 51 sont asservis par une unité de traitement. Cette unité de traitement comporte un calculateur et une mémoire, le calculateur exécutant des instructions mémorisées sous forme de lignes de code dans la mémoire pour appliquer le procédé selon l'invention. Par exemple, l'unité de traitement est un ordinateur.

La figure 3 présente un mandrin de bord de fuite 30 fixé sur un outillage 56. Cette figure 3 présente notamment un outillage muni d'une tige 56" portant un moyen d'orientation 57, et d'une tige 56" portant une broche 300 de fixation de l'arrangement à concevoir.

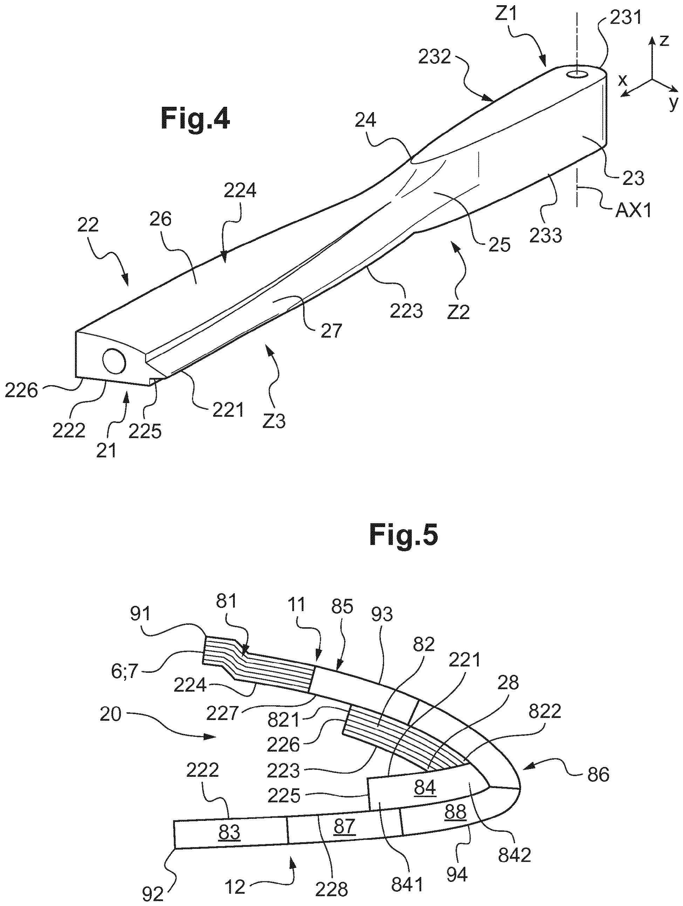

La figure 4 présente un mandrin de bord d'attaque 20.

Ainsi, le procédé de fabrication d'une pale selon l'invention inclut un procédé de fabrication d'un longeron en matériaux composites. Ce longeron est muni d'au moins une douille de fixation. Dès lors, le longeron comprend un sous ensemble dénommé « arrangement » par douille de fixation.

Selon ce procédé de fabrication d'un longeron, on définit alors un mandrin 20, 30 par arrangement à fabriquer durant une étape de préparation STP1.

En référence aux figures 3 et 4, au moins un mandrin peut être un mandrin amovible formé à l'aide d'un outillage représentant un volume interne d'un longeron. Un tel mandrin amovible est désolidarisé d'un arrangement lorsque cet arrangement est chauffé.

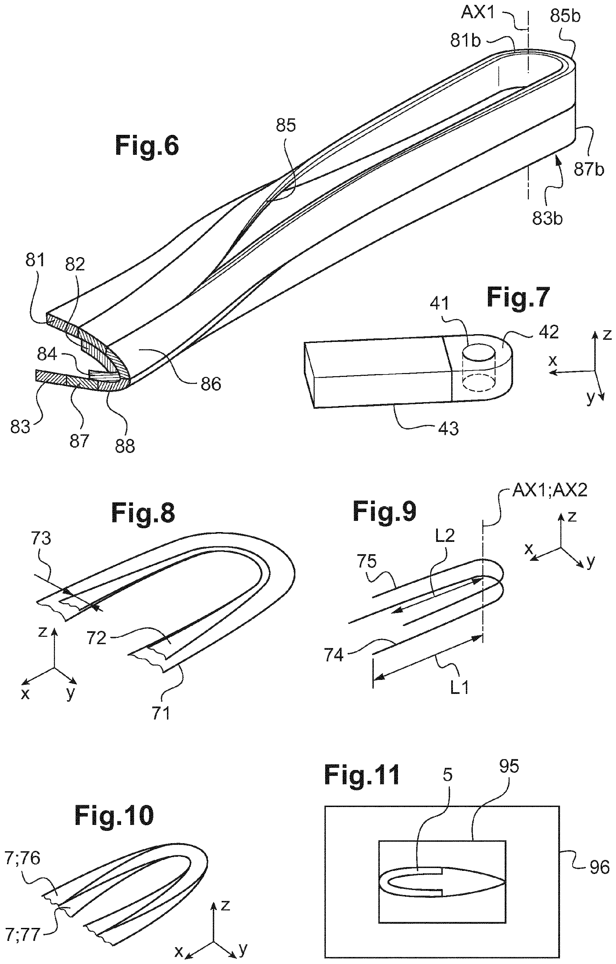

Cependant et en référence à la figure 7, au moins un mandrin peut être un mandrin inamovible. Ce mandrin inamovible comporte alors une douille de fixation 41, un coin d'emplanture 42 entourant cette douille de fixation et un matériau de remplissage 43 qui représentent des éléments constitutifs de la pale à fabriquer.

En référence aux figures 3 et 4, chaque mandrin comprenant une surface courante d'intrados 21, 31 et une surface courante d'extrados 22, 32. Chaque surface courante a une forme en U dans une coupe horizontale vue selon une direction en élévation Z.

De plus, chaque surface courante comprend une zone d'emplanture Z1 munie d'une paroi d'emplanture 23, 33 en forme de C, sensiblement verticale pour réaliser le longeron de la figure 1. Cette paroi d'emplanture forme ainsi un fond 231, 331 de la forme en U de cette surface courante.

En outre, chaque surface courante comprend une zone de raccordement Z2 présentant deux parois de raccordement 24, 25, 34, 35 qui sont décalées transversalement, vrillées et raccordées respectivement à deux extrémités 232, 233, 332, 333 du fond 231, 331 de cette surface courante.

Les deux parois de raccordement de la surface de raccordement d'extrados d'un mandrin et les deux parois de raccordement de la surface de raccordement d'intrados de ce mandrin génèrent conjointement une forme en <> vue selon une coupe transversale du mandrin.

Enfin, chaque surface courante comporte une zone courante Z3 présentant deux parois courantes 26, 27, 36, 37 qui sont décalées transversalement et raccordées respectivement aux deux parois de raccordement 24, 25, 34, 35.

En résumé, chaque mandrin comporte une surface courante d'extrados ayant une forme en U en comprenant successivement une paroi courante dite « première paroi courante d'extrados 26, 36 », une paroi de raccordement dite « première paroi de raccordement d'extrados 24, 34 », une paroi d'emplanture 23, 33, une paroi de raccordement dite « deuxième paroi de raccordement d'extrados 25, 35 », et une paroi courante dite « deuxième paroi courante d'extrados 27, 37 ».

La première paroi courante d'extrados 26, 36 forme une zone externe d'extrados 224. La deuxième paroi courante d'extrados 25, 35 forme une zone interne d'extrados 223.

Dès lors, la première paroi de raccordement d'extrados 24, 34 et la deuxième paroi de raccordement d'extrados 27, 37 forment conjointement une zone de raccordement d'extrados.

De même, chaque mandrin comporte une surface courante d'intrados ayant une forme en U en comprenant successivement une paroi courante dite « première paroi courante d'intrados », une paroi de raccordement dite « première paroi de raccordement d'intrados », une paroi d'emplanture, une paroi de raccordement dite « deuxième paroi de raccordement d'intrados », et une paroi courante dite « deuxième paroi courante d'intrados ».

La première paroi courante d'intrados forme une zone externe d'intrados 222. La deuxième paroi courante d'intrados forme une zone interne d'intrados 225.

La première paroi de raccordement d'intrados et la deuxième paroi de raccordement d'intrados forment conjointement une zone de raccordement d'intrados.

De plus, et en référence à la figure 3, le mandrin de bord de fuite peut comporter une surface courante d'intrados 31 et une surface courante d'extrados 32 qui sont séparées l'une de l'autre verticalement.

Par contre et en référence à la figure 4, le mandrin de bord d'attaque 20 est muni d'une surface courante d'intrados 21 et d'une surface courante d'extrados 22 se rejoignent en formant une pointe.

En outre, la zone externe d'extrados 224 et la zone interne d'extrados 223 du mandrin de bord d'attaque 20 sont séparées verticalement et transversalement par une marche d'extrados 226. De même, la zone externe d'intrados 222 et la zone interne d'intrados 221 sont séparées verticalement et transversalement par une marche d'intrados 225.

Enfin, la zone interne d'intrados 221 et le zone interne d'extrados 223 se rejoignent pour former la pointe du mandrin de bord d'attaque.

Dès lors et en référence à la figure 3, une tête de placement peut déposer un tronçon de ruban en forme de U sur la surface courante qui n'est pas en regard de la plaque 56' de l'outillage. Pour déposer des tronçons de ruban sur l'autre surface courante, il suffit de pivoter le mandrin à l'aide du moyen d'orientation 57, en ayant préalablement enlevé la broche 300.

Durant une étape de fabrication STP2, chaque arrangement est subdivisé en un sous-ensemble d'intrados et un sous-ensemble d'extrados.

Chaque sous-ensemble comporte alors au moins un écheveau, chaque écheveau étant constitué d'un empilement de tronçons de ruban formant un U déposés sur une surface courante d'un mandrin.

On fabrique alors chaque arrangement du longeron séparément et en dehors d'un moule de la pale.

Par suite, on dispose le mandrin adéquat sur l'outillage. Ensuite, on fabrique un sous-ensemble de l'arrangement à l'aide de la tête de placement, éventuellement en utilisant le vireur.

Ensuite, on retourne le mandrin. On fabrique alors l'autre sous-ensemble de l'arrangement à l'aide de la tête de placement, éventuellement en utilisant le vireur.

Chaque sous-ensemble est fabriqué en empilant des tronçons de ruban sur le mandrin par une méthode de placement de fibres.

Par exemple, la tête de placement 53 enroule alors chaque tronçon de ruban du sous-ensemble d'intrados autour d'un axe d'emplanture AX1, AX2 du mandrin en déposant ledit tronçon par-dessus la surface courante d'intrados 21, 31. Eventuellement, la tête de placement enroule chaque tronçon de ruban du sous-ensemble d'intrados autour d'un axe d'emplanture en décrivant un U. cette tête de placement dépose alors un tronçon au dessus d'une première paroi courante de la surface courante d'intrados, d'une première paroi de raccordement de la surface courante d'intrados, de la paroi d'emplanture, d'une deuxième paroi de raccordement de la surface courante d'intrados, et d'une deuxième paroi courante de la surface courante d'intrados

Ensuite, la tête de placement 53 enroule chaque tronçon de ruban du sous-ensemble d'extrados autour d'un axe d'emplanture AX1, AX2 en déposant ledit tronçon sur la surface courante d'extrados. Par exemple, la tête de placement enroule chaque tronçon de ruban du sous-ensemble d'extrados autour d'un axe d'emplanture en déposant ledit tronçon au dessus d'une première paroi courante de la surface courante d'extrados, d'une première paroi de raccordement de la surface courante d'extrados, de la paroi d'emplanture, d'une deuxième paroi de raccordement de la surface courante d'extrados, et d'une deuxième paroi courante de la surface courante d'extrados.

Eventuellement, on fabrique les écheveaux l'un après l'autre, en disposant tous les tronçons d'un écheveau sur un mandrin avant de placer les tronçons d'un autre écheveau.

En outre, le longeron peut avoir une épaisseur dégressive selon son envergure en partant d'un axe d'emplanture.

Pour obtenir cette caractéristique et en référence à la figure 8, au moins un tronçon 72 de ruban d'un sous ensemble peut recouvrir dans la zone courante un autre tronçon 71 du sous-ensemble selon une largeur 73 en corde qui décroit.

Selon la variante de la figure 9, au moins un tronçon 74 de ruban d'un sous ensemble s'étend en envergure à partir d'un axe d'emplanture sur une première longueur L1. Dès lors, au moins un autre tronçon 75 s'étend en envergure à partir de cet axe d'emplanture sur une deuxième longueur L2 différente de la première longueur L1, et notamment inférieure à la première longueur L1.

Selon la variante de la figure 10, au moins un tronçon 76 est décalé transversalement par rapport à un autre tronçon 77 dans la zone courante.

Ces variantes sont cumulables.

En référence à la figure 5, l'arrangement de bord d'attaque peut être réalisé en alternant la dépose des tronçons d'un écheveau du sous-ensemble d'intrados et la dépose des tronçons d'un écheveau du sous-ensemble d'extrados. De plus, la tête de placement accole au niveau de la pointe 28 du mandrin de bord d'attaque un brin 82 d'un écheveau contre un brin de l'écheveau précédemment déposé pour former un épi 84 de bord d'attaque.

Cette caractéristique permet d'obtenir un bord d'attaque massif.

Par exemple, la tête de placement forme un premier écheveau 91 du sous-ensemble d'extrados de l'arrangement de bord d'attaque.

Cette tête de placement agence ainsi une pluralité de tronçons de ruban sur le mandrin de bord d'attaque 20. On note que seuls les tronçons du premier écheveau sont représentés pour ne pas alourdir la figure 5.

Chaque tronçon du premier écheveau 91 peut comprendre un premier brin 81, un brin central 81b visible sur la figure 6 et un deuxième brin 82 pour conférer une forme en U au tronçon. Par suite, la tête de placement dépose le premier brin 81 sur la zone externe d'extrados 224 et la zone de raccordement d'extrados, le brin central 81b sur une zone d'emplanture d'extrados, et le deuxième brin 82 sur la zone de raccordement d'extrados et la zone interne d'extrados 223.

Une portion d'extrados 227 de la zone externe d'extrados 224 débouchant sur la marche d'extrados 226 n'est toutefois pas recouverte par le premier brin 81.

Par contre, le deuxième brin 82 saille transversalement de la zone interne d'extrados 223.

Favorablement, la portion 821 du premier écheveau 91 qui est déposée sur la zone interne d'extrados 223 affleure la zone externe d'extrados 224.

Par suite, la tête de placement forme un deuxième écheveau 92 du sous-ensemble d'intrados 11, chaque tronçon du deuxième écheveau comportant successivement un troisième brin 83 ainsi qu'un brin central 83b visible sur la figure 6 et un quatrième brin 84.

Pour chaque tronçon, la tête de placement dépose le troisième brin 83 sur la zone externe d'intrados 222 et une zone de raccordement d'intrados, le brin central 83b sur une zone d'emplanture d'intrados, le quatrième brin 84 sur la zone de raccordement d'intrados et la zone interne d'intrados 221.

Toutefois, une portion d'intrados 228 de la zone externe d'intrados 222 débouchant sur la marche d'intrados 225 n'est pas recouverte par le troisième brin 83.

Par contre, le quatrième brin 84 saille transversalement de la zone interne d'intrados 221 pour être en appui contre un bord du premier brin 81.

La portion 841 du deuxième écheveau 92 qui est déposée sur ladite zone interne d'intrados 221 affleure la zone externe d'intrados 222.

La tête de placement forme alors un troisième écheveau 93 du sous-ensemble d'extrados en agençant une pluralité de tronçons sur ledit mandrin, chaque tronçon du troisième écheveau comportant successivement un cinquième brin 85 ainsi qu'un brin central 85b visible sur le figure 6 et un sixième brin 86.

Pour chaque tronçon, la tête de placement dépose le cinquième brin 85 conjointement sur la portion d'extrados 227 et partiellement sur le deuxième brin 82 dans la partie courante puis sur la zone de raccordement d'extrados. Le brin central 85b est déposé sur la zone d'emplanture d'extrados. En outre, le sixième brin 86 est déposé sur la zone de raccordement d'extrados puis dans la zone courante sur le deuxième brin 82 et sur un bord du quatrième brin 84.

En outre, le sixième brin 86 saille transversalement du quatrième brin 84.

Enfin, la tête de placement forme un quatrième écheveau 94 du sous-ensemble d'intrados en agençant une pluralité de tronçons sur ledit mandrin. Chaque tronçon du quatrième écheveau 94 comporte successivement un septième brin 87 ainsi qu'un brin central 87b visible sur la figure 6 et un huitième brin 88.

Pour chaque tronçon, la tête de placement dépose le septième brin 87 conjointement sur ladite portion d'intrados 228 et partiellement sur le quatrième brin 84 dans la partie courante puis sur la zone de raccordement d'intrados. Le brin central est déposé sur la zone d'emplanture d'intrados. Finalement, le huitième brin 88 est déposé sur la zone de raccordement d'intrados puis dans la zone courante sur le quatrième brin 84 et contre un bord du sixième brin 86.

La figure 6 montre schématiquement l'arrangement de bord d'attaque en résultant.

Par ailleurs, lorsque la tête de placement a déposé l'ensemble des tronçons de ruban sur un mandrin, on chauffe l'arrangement sur son mandrin.

Dans le cadre d'un longeron à deux douilles de fixation, le mandrin de bord d'attaque et le mandrin de bord de fuite peuvent être accolés puis conjointement chauffés pour la polymérisation ou la consolidation du longeron.

En référence à la figure 11, un opérateur fabrique en outre un moule 95 de la pale à fabriquer. L'opérateur dispose alors le longeron 5 dans le moule 95.

Ce moule 95 est alors disposé dans un moyen de chauffage pour polymériser ou consolider la pale 1.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de fabrication d'un longeron (5) d'une pale (1) à l'aide de rubans (6) en matériaux composites, ledit longeron comportant transversalement au moins un arrangement (10, 15), chaque arrangement (10, 15) étant à enrouler autour d'un axe d'emplanture (AX1, AX2) dudit longeron (5),
**caractérisé en ce que** :
- durant une étape de préparation (STP1), on définit un mandrin (20, 30) mâle par arrangement (10, 15) à fabriquer, chaque mandrin (20, 30) comprenant une surface courante d'intrados (21, 31) et une surface courante d'extrados (22, 32) en forme de U, chaque surface courante comprenant :
∘ une zone d'emplanture (Z1) munie d'une paroi d'emplanture (23, 33) en forme de C formant un fond (231, 331) de ladite forme de U,
∘ une zone de raccordement (Z2) présentant deux parois de raccordement (24, 25, 34, 35) vrillées raccordées respectivement à deux extrémités (232, 233, 332, 333) dudit fond (231, 331),
∘ une zone courante (Z3) présentant deux parois courantes (26, 27, 36, 37) raccordées respectivement aux deux parois de raccordement (24, 25, 34, 35),
- durant une étape de fabrication (STP2), on subdivise chaque arrangement en un sous-ensemble d'intrados (11) et un sous-ensemble d'extrados (12) comprenant au moins un écheveau (8), chaque écheveau comprenant une pluralité de tronçons (7) de rubans en forme de U empilés les uns sur les autres,
- durant ladite étape de fabrication, on fabrique ledit sous ensemble d'intrados (12) et ledit sous ensemble d'extrados (11) d'un arrangement (10, 15) sur un même mandrin (20, 30) adapté à cet arrangement (10, 15) et en dehors d'un moule de fabrication de ladite pale, ledit sous ensemble d'intrados (11) et ledit sous ensemble d'extrados (12) d'un arrangement (10, 15) étant fabriqués en empilant des tronçons de ruban sur ledit mandrin par une méthode de placement de fibres à l'aide d'une tête de placement (53), ladite tête de placement (53) enroulant chaque tronçon de ruban du sous-ensemble d'intrados autour d'un axe d'emplanture (AX1, AX2) en déposant ledit tronçon par-dessus la surface courante d'intrados (21, 31), ladite tête de placement (53) enroulant chaque tronçon de ruban du sous-ensemble d'extrados autour d'un axe d'emplanture (AX1, AX2) en déposant ledit tronçon sur la surface courante d'extrados,
- durant une étape de chauffage, on chauffe chaque arrangement (10, 15) sur son mandrin (20, 30).

2. Procédé selon la revendication 1,
**caractérisé en ce qu'**au moins un mandrin (20, 30) est un mandrin amovible formé à l'aide d'un outillage représentant un volume interne d'un longeron, ledit mandrin étant enlevé suite à ladite étape de chauffage.

3. Procédé selon l'une quelconque des revendications 1 à 2,
**caractérisé en ce qu'**au moins un mandrin (20, 30) est un mandrin inamovible formé d'une douille de fixation (41), d'un coin d'emplanture (42) entourant ladite douille de fixation et d'un matériau de remplissage (43) d'une pale.

4. Procédé selon l'une quelconque des revendications 1 à 3, **caractérisé en ce qu'**on agence le mandrin sur un outillage (56) solidaire d'un vireur (60), ledit vireur (60) engendrant une rotation du mandrin durant l'étape de fabrication.

5. Procédé selon l'une quelconque des revendications 1 à 4,
**caractérisé en ce que** durant l'étape de fabrication, on fabrique lesdits écheveaux l'un après l'autre, en disposant tous les tronçons d'un écheveau sur un mandrin avant de placer les tronçons d'un autre écheveau,

6. Procédé selon l'une quelconque des revendications 1 à 5,
**caractérisé en ce qu'**au moins un tronçon (72) de ruban d'un sous ensemble recouvre dans la zone courante un autre tronçon (71) du sous-ensemble selon une largeur (73) en corde qui décroit.

7. Procédé selon l'une quelconque des revendications 1 à 6,
**caractérisé en ce qu'**au moins un tronçon (74) de ruban d'un sous ensemble s'étendant en envergure à partir dudit axe d'emplanture sur une longueur dite « première longueur (L1) », au moins un autre tronçon (75) s'étend en envergure à partir dudit axe d'emplanture sur une longueur dite « deuxième longueur (L2) » différente de la première longueur (L1) pour conférer une épaisseur dégressive au sous-ensemble.

8. Procédé selon l'une quelconque des revendications 1 à 7,
**caractérisé en ce que** ledit longeron comportant un arrangement dit « arrangement de bord de fuite (15) », on définit un mandrin dit « mandrin de bord de fuite (30) » muni d'une surface courante d'intrados (31) et d'une surface courante d'extrados (32) séparées l'une de l'autre verticalement.

9. Procédé selon l'une quelconque des revendications 1 à 8, **caractérisé en ce que** ledit longeron comportant un arrangement dit « arrangement de bord d'attaque (10) », on définit un mandrin dit « mandrin de bord d'attaque (20) » muni d'une surface courante d'intrados (21) et d'une surface courante d'extrados (22) se rejoignant en formant une pointe (28).

10. Procédé de fabrication selon la revendication 9,
**caractérisé en ce que** ledit mandrin de bord d'attaque (20) présente :
- une surface courante d'extrados (22) munie transversalement d'une zone externe d'extrados (224) et d'une zone interne d'extrados (223) séparées verticalement par une marche d'extrados (226),
- une surface courante d'intrados (21) munie transversalement d'une zone externe d'intrados (222) et d'une zone interne d'intrados (221) séparées verticalement par une marche d'intrados (225), la zone interne d'intrados (221) et le zone interne d'extrados (223) se rejoignant pour former ladite pointe (28).

11. Procédé de fabrication selon la revendication 9,
**caractérisé en ce qu'**on alterne la dépose des tronçons d'un écheveau du sous-ensemble d'intrados et la dépose des tronçons d'un écheveau du sous-ensemble d'extrados en accolant au niveau de ladite pointe (28) un brin (82) d'un écheveau contre un brin de l'écheveau précédemment déposé pour former un épi (84) de bord d'attaque.

12. Procédé selon la revendication 10,
**caractérisé en ce que** durant l'étape de fabrication :
- on forme un premier écheveau (91) du sous-ensemble d'extrados en agençant une pluralité de tronçons sur ledit mandrin (20) à l'aide de ladite tête de placement (53), chaque tronçon du premier écheveau (91) comportant successivement un premier brin (81) ainsi qu'un brin central (81b) et un deuxième brin (82), le premier brin (81) étant déposé sur la zone externe d'extrados (224) et une zone de raccordement d'extrados, le brin central (81b) étant déposé sur une zone d'emplanture d'extrados, et le deuxième brin (82) étant déposé sur la zone de raccordement d'extrados et la zone interne d'extrados (223), une portion d'extrados (227) de la zone externe d'extrados (224) débouchant sur la marche d'extrados (226) n'étant pas recouverte par le premier brin (81), le deuxième brin (82) saillant transversalement de la zone interne d'extrados (223),
- on forme un deuxième écheveau (92) du sous-ensemble d'intrados (11) en agençant une pluralité de tronçons sur ledit mandrin à l'aide de ladite tête de placement (53), chaque tronçon du deuxième écheveau comportant successivement un troisième brin (83) ainsi qu'un brin central (83b) et un quatrième brin (84), le troisième brin (83) étant déposé sur la zone externe d'intrados (222) et une zone de raccordement d'intrados, le brin central (83b) étant déposé sur une zone d'emplanture d'intrados, le quatrième brin (84) étant déposé sur la zone de raccordement d'intrados et la zone interne d'intrados (221), une portion d'intrados (228) de la zone externe d'intrados (222) débouchant sur la marche d'intrados (225) n'étant pas recouverte par le troisième brin (83), le quatrième brin (84) saillant transversalement de la zone interne d'intrados (221) pour être en appui contre un bord du premier brin (81),
- on forme un troisième écheveau (93) du sous-ensemble d'extrados en agençant une pluralité de tronçons sur ledit mandrin à l'aide de ladite tête de placement, chaque tronçon du troisième écheveau comportant successivement un cinquième brin (85) ainsi qu'un brin central (85b) et un sixième brin (86), le cinquième brin (85) étant déposé conjointement sur ladite portion d'extrados (227) et partiellement sur le deuxième brin (82) dans la partie courante puis recouvrant la zone de raccordement d'extrados dans la zone courante, le brin central (85b) étant déposé sur la zone d'emplanture d'extrados, et le sixième brin (86) étant déposé sur la zone de raccordement d'extrados puis dans la zone courante sur le deuxième brin (82) et sur un bord du quatrième brin (84), le sixième brin (86) saillant transversalement du quatrième brin (84),
- on forme un quatrième écheveau (94) du sous-ensemble d'intrados en agençant une pluralité de tronçons sur ledit mandrin à l'aide de ladite tête de placement, chaque tronçon du quatrième écheveau (94) comportant successivement un septième brin (87) ainsi qu'un brin central (87b) et un huitième brin (88), le septième brin (87) étant déposé conjointement sur ladite portion d'intrados (228) et partiellement sur le quatrième brin (84) dans la partie courante puis recouvrant la zone de raccordement d'intrados dans la zone courante, le brin central (87b) étant déposé sur la zone d'emplanture d'intrados, et le huitième brin (88) étant déposé sur la zone de raccordement d'intrados puis dans la zone courante sur le quatrième brin (84) et contre un bord du sixième brin (86).

13. Procédé selon la revendication 12,
**caractérisé en ce que** la portion (821) du premier écheveau (91) qui est déposée sur ladite zone interne d'extrados (223) affleure la zone externe d'extrados (224), et la portion (841) du deuxième écheveau (92) qui est déposée sur ladite zone interne d'intrados (221) affleure la zone externe d'intrados (222).

14. Procédé selon la revendication 1,
**caractérisé en ce que** durant ladite étape de fabrication, ladite tête de placement enroulant chaque tronçon de ruban du sous-ensemble d'intrados autour d'un axe d'emplanture en déposant ledit tronçon au dessus d'une première paroi courante de la surface courante d'intrados, d'une première paroi de raccordement de la surface courante d'intrados, de la paroi d'emplanture, d'une deuxième paroi de raccordement de la surface courante d'intrados, et d'une deuxième paroi courante de la surface courante d'intrados, ladite tête de placement enroulant chaque tronçon de ruban du sous-ensemble d'extrados autour d'un axe d'emplanture en déposant ledit tronçon au dessus d'une première paroi courante de la surface courante d'extrados, d'une première paroi de raccordement de la surface courante d'extrados, de la paroi d'emplanture, d'une deuxième paroi de raccordement de la surface courante d'extrados, et d'une deuxième paroi courante de la surface courante d'extrados.

15. Procédé de fabrication d'une pale (1),
**caractérisé en ce qu'**on :
- fabrique un longeron (5) en appliquant le procédé selon l'une quelconque des revendications 1 à 14,
- fabrique un moule (95) de la pale,
- on agence ledit longeron (5) dans ledit moule (95),
- on agence ledit moule (95) dans un moyen de chauffage (96) pour chauffer ladite pale (1).

16. Pale (1) munie d'au moins une douille de fixation et d'un longeron, ledit longeron (5) comportant un arrangement (10, 15) enroulé autour de ladite douille de fixation, cet arrangement comprenant un sous-ensemble d'intrados et un sous-ensemble d'extrados, cet arrangement s'étendant en envergure en comprenant successivement une zone d'emplanture (Z1) au niveau de la douille de fixation, une zone de raccordement (Z2) puis une zone courante (Z3),
**caractérisée en ce qu'**au moins une section dite « section de raccordement » dudit arrangement dans la zone de raccordement a une forme de losange, ledit sous-ensemble d'intrados ayant une forme de V et ledit sous-ensemble d'extrados ayant une forme V inversé dans ladite section de raccordement.

17. Pale selon la revendication 16
**caractérisée en ce que** chaque section dite « section d'emplanture » dudit arrangement dans la zone d'emplanture comporte au moins une tranche rectangulaire s'étendant en élévation selon sa longueur, ledit axe d'emplanture étant un axe vertical sensiblement orthogonal au plan d'extension en envergure (P1) du longeron.

18. Pale selon la revendication 16
**caractérisée en ce qu'**au moins une section d'un arrangement de bord d'attaque (10) présente une forme en C dans la zone courante (Z3), un arrangement de bord de fuite (15) prolongeant cette forme en C au niveau d'un extrados et d'un intrados de la pale.

## Patentansprüche

1. Verfahren zur Herstellung eines Längsträgers (5) eines Rotorblatts (1) mit Hilfe von Bändern (6) aus Verbundmaterialien, wobei der Längsträger in Querrichtung mindestens eine Anordnung (10, 15) aufweist, wobei jede Anordnung (10, 15) aufzurollen ist um eine Achse (AX1, AX2) eines Fußes des Längsträgers (5),
**dadurch gekennzeichnet, dass**:
- während eines Vorbereitungsschritts (STP1) pro herzustellender Anordnung (10, 15) eine Wickelhülse (20, 30) definiert wird, wobei jede Wickelhülse (20, 30) eine glatte druckseitige Fläche (21, 31) und eine glatte saugseitige Fläche (22, 32) in Form eines Us aufweist, wobei jede glatte Fläche aufweist:
∘ einen Fußbereich (Z1), der mit einer Fußwandung (23, 33) in Form eines Cs versehen ist, der einen Boden (231, 331) der U-Form bildet,
∘ einen Verbindungsbereich (Z2), der zwei Verbindungswandungen (24, 25, 34, 35) aufweist, die verdreht und jeweils an zwei Enden (232, 233, 332, 333) des Bodens (231, 331) angeschlossen sind,
∘ einen glatten Bereich (Z3) mit zwei glatten Wandungen (26, 27, 36, 37), die jeweils an zwei Verbindungswandungen (24, 25, 34, 35) angeschlossen sind,
- während eines Herstellungsschrittes (STP2) jede Anordnung in eine druckseitige Unteranordnung (11) und eine saugseitige Unteranordnung (12) unterteilt wird, mit mindestens einem Strang (8), wobei jeder Strang eine Mehrzahl von U-förmigen Bandabschnitten (7) aufweist, die aufeinandergestapelt sind,
- während des Herstellungsschrittes die druckseitige Unteranordnung (12) und die saugseitige Unteranordnung (11) einer Anordnung (10, 15) auf derselben Wickelhülse (20, 30) hergestellt werden, die an diese Anordnung (10, 15) angepasst ist, und außerhalb einer Herstellungsform des Rotorblatts, wobei die druckseitige Unteranordnung (11) und die saugseitige Unteranordnung (12) einer Anordnung (10, 15) hergestellt werden, indem Bandabschnitte auf der Wickelhülse gestapelt werden durch ein Verfahren der Anordnung von Einzelsträngen mit Hilfe eines Anordnungskopfes (53), wobei der Anordnungskopf (53) jeden Bandabschnitt der druckseitigen Unteranordnung um eine Achse (AX1, AX2) des Fußes aufwickelt, indem der Abschnitt auf der glatten druckseitigen Fläche (21, 31) abgelegt wird, wobei der Anordnungskopf (53) jeden Bandabschnitt der saugseitigen Unteranordnung um eine Achse (AX1, AX2) des Fußes aufwickelt, indem der Abschnitt auf der glatten saugseitigen Fläche abgelegt wird,
- während eines Heizschritts jede Anordnung (10, 15) auf ihrer Wickelhülse (20, 30) geheizt wird.

2. Verfahren nach Anspruch 1,
**dadurch gekennzeichnet, dass** mindestens eine Wickelhülse (20, 30) eine abnehmbare Wickelhülse ist, die mit Hilfe eines Werkzeugs gefertigt wurde, das ein Volumen hat, das dem Innenvolumen eines Längsträgers entspricht, wobei die Wickelhülse nach dem Heizschritt entfernt wird.

3. Verfahren nach einem der Ansprüche 1 bis 2,
**dadurch gekennzeichnet, dass** mindestens eine Wickelhülse (20, 30) eine nicht abnehmbare Wickelhülse ist, die aus einer Befestigungsbuchse (41), einer Ecke (42) des Fußes, die die Befestigungsbuchse umgibt, und einem Füllmaterial (43) des Rotorblatts geformt ist.

4. Verfahren nach einem der Ansprüche 1 bis 3,
**dadurch gekennzeichnet, dass** die Wickelhülse auf einem Werkzeug (56) angebracht wird, das mit einer Drehvorrichtung (60) fest verbunden ist, wobei die Drehvorrichtung (60) eine Drehung der Wickelhülse während des Herstellungsschritts bewirkt.

5. Verfahren nach einem der Ansprüche 1 bis 4,
**dadurch gekennzeichnet, dass** während des Herstellungsschritts die Stränge einer nach dem anderen hergestellt werden, indem alle Abschnitte eines Strangs auf einer Wickelhülse angeordnet werden, bevor die Abschnitte eines anderen Strangs platziert werden.

6. Verfahren nach einem der Ansprüche 1 bis 5,
**dadurch gekennzeichnet, dass** mindestens ein Bandabschnitt (72) einer Unteranordnung in dem glatten Bereich einen anderen Abschnitt (71) der Unteranordnung mit einer Breite (73) in Dickenrichtung bedeckt, die abnimmt.

7. Verfahren nach einem der Ansprüche 1 bis 6,
**dadurch gekennzeichnet, dass** mindestens ein Bandabschnitt (74) einer Unteranordnung sich ausgehend von der Fußachse in Spannweitenrichtung über eine "erste Länge (L1)" genannte Länge erstreckt, und mindestens ein weiterer Abschnitt (75) sich ausgehend von der Fußachse in Spannweitenrichtung über eine "zweite Länge (L2)" genannte Länge erstreckt, die von der ersten Länge (L1) verschieden ist, um der Unteranordnung eine abnehmende Dicke zu geben.

8. Verfahren nach einem der Ansprüche 1 bis 7,
**dadurch gekennzeichnet, dass** der Längsträger eine "Hinterkantenanordnung (15)" genannte Anordnung aufweist, eine "Hinterkanten-Wickelhülse (30)" genannte Wickelhülse definiert wird, die mit einer glatten druckseitigen Fläche (31) und einer glatten saugseitigen Fläche (32), die voneinander vertikal getrennt sind, versehen ist.

9. Verfahren nach einem der Ansprüche 1 bis 8,
**dadurch gekennzeichnet, dass** der Längsträger eine "Vorderkantenanordnung (10)" genannte Anordnung aufweist, wobei eine "Vorderkanten-Wickelhülse (20)" genannte Wickelhülse definiert wird, die mit einer glatten druckseitigen Fläche (21) und einer glatten saugseitigen Fläche (22) versehen ist, die sich treffen und eine Spitze (28) bilden.

10. Herstellungsverfahren nach Anspruch 9,
**dadurch gekennzeichnet, dass** die Vorderkanten-Wickelhülse (20) aufweist:
- eine glatte saugseitige Fläche (22), die in Querrichtung mit einem äußeren saugseitigen Bereich (224) und einem inneren saugseitigen Bereich (223) versehen ist, die vertikal durch eine saugseitige Stufe (226) voneinander getrennt sind,
- eine glatte druckseitige Fläche (21), die in Querrichtung mit einem äußeren druckseitigen Bereich (222) und einem inneren druckseitigen Bereich (221) versehen ist, die vertikal durch eine druckseitige Stufe (225) voneinander getrennt sind, wobei der innere druckseitige Bereich (221) und der innere saugseitige Bereich (223) sich treffen, um die Spitze (28) zu bilden.

11. Herstellungsverfahren nach Anspruch 9,
**dadurch gekennzeichnet, dass** die Ablage von Abschnitten eines Strangs der druckseitigen Unteranordnung und die Ablage von Abschnitten eines Strangs der saugseitigen Unteranordnung abgewechselt werden, indem auf der Höhe der Spitze (28) ein Einzelstrang (82) eines Strangs gegen einen Einzelstrang des zuvor abgelegten Strangs angefügt wird, um einen Vorderkanten-Fischgratverband (84) zu bilden.

12. Verfahren nach Anspruch 10,
**dadurch gekennzeichnet, dass** während des Herstellungsschritts:
- ein erster Strang (91) der saugseitigen Unteranordnung gebildet wird, indem eine Mehrzahl von Abschnitten auf der Wickelhülse (20) mit Hilfe des Anordnungskopfes (53) angeordnet wird, wobei jeder Abschnitt des ersten Strangs (91) aufeinanderfolgend einen ersten Einzelstrang (81) sowie einen mittleren Einzelstrang (81b) und einen zweiten Einzelstrang (82) aufweist, wobei der erste Einzelstrang (81) in dem äußeren saugseitigen Bereich (224) und in dem saugseitigen Verbindungsbereich abgelegt wird, wobei der mittlere Einzelstrang (81b) in einem saugseitigen Fußbereich abgelegt wird, und der zweite Einzelstrang (82) in dem saugseitigen Verbindungsbereich und in dem inneren saugseitigen Bereich (223) abgelegt wird, wobei ein saugseitiger Teil (227) des äußeren saugseitigen Bereichs (224) auf der saugseitigen Stufe (226) mündet, die nicht mit dem ersten Einzelstrang (81) bedeckt ist, wobei der zweite Einzelstrang (82) in Querrichtung gegenüber dem inneren saugseitigen Bereich (223) vorsteht,
- ein zweiter Strang (92) der druckseitigen Unteranordnung (11) gebildet wird, indem eine Mehrzahl von Abschnitten auf der Wickelhülse mit Hilfe des Anordnungskopfes (53) angeordnet wird, wobei jeder Abschnitt des zweiten Strangs aufeinanderfolgend einen dritten Einzelstrang (83) sowie einen mittleren Einzelstrang (83b) und einen vierten Einzelstrang (84) aufweist, wobei der dritte Einzelstrang (83) in dem äußeren druckseitigen Bereich (222) und in einem druckseitigen Verbindungsbereich abgelegt wird, wobei der mittlere Einzelstrang (83b) in einem druckseitigen Fußbereich abgelegt wird, der vierte Einzelstrang (84) in dem druckseitigen Verbindungsbereich und in dem inneren druckseitigen Bereich (221) abgelegt wird, wobei ein druckseitiger Teil (228) des äußeren druckseitigen Bereichs (222) auf der druckseitigen Stufe (225) mündet, die nicht mit dem dritten Einzelstrang (83) bedeckt ist, wobei der vierte Einzelstrang (84) in Querrichtung gegenüber dem inneren druckseitigen Bereich (221) vorsteht, um gegen einen Rand des ersten Einzelstrangs (81) anzuliegen,
- ein dritter Strang (93) der saugseitigen Unteranordnung gebildet wird, indem eine Mehrzahl von Abschnitten auf der Wickelhülse mit Hilfe des Anordnungskopfes angeordnet wird, wobei jeder Abschnitt des dritten Strangs aufeinanderfolgend einen fünften Einzelstrang (85) sowie einen mittleren Einzelstrang (85b) und einen sechsten Einzelstrang (86) aufweist, wobei der fünfte Einzelstrang (85) in dem saugseitigen Bereich (227) und teilweise auf dem zweiten Einzelstrang (82) in dem glatten Teil abgelegt wird und den saugseitigen Verbindungsbereich in dem glatten Bereich bedeckt, wobei der mittlere Einzelstrang (85b) in dem saugseitigen Fußbereich abgelegt wird, und der sechste Einzelstrang (86) in dem saugseitigen Verbindungsbereich und in dem glatten Bereich des zweiten Einzelstrangs (82) und auf einer Kante des vierten Einzelstrangs (84) abgelegt wird, wobei der sechste Einzelstrang (86) in Querrichtung gegenüber dem vierten Einzelstrang (84) vorsteht,
- ein vierter Strang (94) der druckseitigen Unteranordnung gebildet wird, indem eine Mehrzahl von Abschnitten auf der Wickelhülse mit Hilfe des Anordnungskopfes angeordnet wird, wobei jeder Abschnitt des vierten Strangs (94) aufeinanderfolgend einen siebten Einzelstrang (87) sowie einen mittleren Einzelstrang (87b) und einen achten Einzelstrang (88) aufweist, wobei der siebte Einzelstrang (87) dabei in dem druckseitigen Teil (228) und teilweise auf dem vierten Einzelstrang (84) in dem glatten Teil abgelegt wird und den druckseitigen Verbindungsbereich in dem glatten Bereich bedeckt, wobei der mittlere Einzelstrang (87b) in dem druckseitigen Fußbereich abgelegt wird, und der vierte Einzelstrang (88) in dem druckseitigen Verbindungsbereich und in dem glatten Bereich auf dem vierten Einzelstrang (84) und gegen eine Kante des sechsten Einzelstrangs (86) abgelegt wird.

13. Verfahren nach Anspruch 12,
**dadurch gekennzeichnet, dass** der Teil (821) des ersten Strangs (91), der in dem inneren saugseitigen Bereich (223) abgelegt wird, mit dem äußeren saugseitigen Bereich (224) bündig liegt, und der Teil (841) des zweiten Strangs (92), der in dem inneren druckseitigen Bereich (221) abgelegt ist, mit dem äußeren druckseitigen Bereich (222) bündig liegt.

14. Verfahren nach Anspruch 1,
**dadurch gekennzeichnet, dass** während des Herstellungsschrittes der Anordnungskopf jeden Abschnitt des Bandes der druckseitigen Unteranordnung um eine Fußachse aufrollt, indem er den Abschnitt über einer ersten glatten Wandung der druckseitigen Plattenfläche, einer ersten Verbindungswandung der druckseitigen glatten Fläche, der Fußwandung, einer zweiten Verbindungswandung der druckseitigen glatten Fläche, und der zweiten glatten Wandung der druckseitigen glatten Fläche ablegt, wobei der Ablagekopf jeden Abschnitt des Bandes der saugseitigen Unteranordnung um eine Fußachse wickelt, indem er den Abschnitt über einer ersten glatten Wandung der saugseitigen glatten Fläche, einer ersten Verbindungswandung der saugseitigen glatten Fläche, der Fußwandung, einer zweiten Verbindungswandung der saugseitigen glatten Fläche und einer zweiten glatten Wandung der saugseitigen glatten Fläche ablegt.

15. Herstellungsverfahren eines Rotorblatts (1),
**dadurch gekennzeichnet, dass** man:
- einen Längsträger (5) herstellt unter Anwendung des Verfahrens nach einem der Ansprüche 1 bis 14,
- eine Gussform (95) des Rotorblatts herstellt,
- den Längsträger (5) in der Gussform (95) platziert,
- die Gussform (95) in einem Heizmittel (96) anordnet, um das Rotorblatt (1) aufzuheizen.

16. Rotorblatt (1) mit mindestens einer Befestigungshülse und einem Längsträger, wobei der Längsträger (5) eine Anordnung (10, 15) aufweist, die um die Befestigungshülse gewickelt ist, wobei diese Anordnung eine druckseitige Unteranordnung und eine saugseitige Unteranordnung aufweist, wobei diese Anordnung sich in Spannweitenrichtung erstreckt und aufeinanderfolgend einen Fußbereich (Z1) auf der Höhe der Befestigungshülse, einen Verbindungsbereich (Z2) und einen glatten Bereich (Z3) aufweist,
**dadurch gekennzeichnet, dass** mindestens ein "Verbindungsquerschnitt" genannter Querschnitt der Anordnung in dem Verbindungsbereich rombusförmig ist, wobei die druckseitige Unteranordnung V-förmig ist und die saugseitige Unteranordnung die Form eines umgekehrten Vs in dem Verbindungsquerschnitt aufweist.

17. Rotorblatt nach Anspruch 16,
**dadurch gekennzeichnet, dass** jeder "Fußquerschnitt" genannte Querschnitt der Anordnung in dem Fußbereich mindestens einen rechteckigen Abschnitt aufweist, der sich in die Höhe entlang seiner Länge erstreckt, wobei die Fußachse eine vertikale Achse ist, die im Wesentlichen senkrecht auf der Erstreckungsebene in Spannweitenrichtung (P1) des Längsträgers verläuft.

18. Rotorblatt nach Anspruch 16,
**dadurch gekennzeichnet, dass** mindestens eine Anordnung der Vorderkante (10) in dem glatten Bereich (Z3) C-förmig ist, wobei eine Anordnung der Hinterkante (15) diese C-Form auf der Höhe einer Saugseite und einer Druckseite des Rotorblatts verlängert.

## Claims

1. A method for manufacturing a spar (5) of a blade (1) with the aid of tapes (6) of composite materials, said spar comprising transversely at least one arrangement (10, 15), each arrangement (10, 15) being for winding around a root axis (AX1, AX2) of said spar (5),
**characterised in that**:
- during a preparation step (STP1), one male mandrel (20, 30) is defined per arrangement (10, 15) to be manufactured, each mandrel (20, 30) comprising a lower-surface working surface (21, 31) and an upper-surface working surface (22, 32) in a U-shape, each working surface comprising:
• a root zone (Z1) provided with a root wall (23, 33) in a C-shape forming a base (231, 331) of said U-shape,
• a connecting zone (Z2) having two twisted connecting walls (24, 25, 34, 35) connected respectively to two ends (232, 233, 332, 333) of said base (231,331),
• a working zone (Z3) having two working walls (26, 27, 36, 37) connected respectively to the two connecting walls (24, 25, 34, 35),
- during a manufacturing step (STP2), each arrangement is subdivided into a lower-surface sub-assembly (11) and an upper-surface sub-assembly (12) comprising at least one hank (8), each hank comprising a plurality of segments (7) of tapes in a U-shape stacked one on another,
- during said manufacturing step, said lower-surface sub-assembly (12) and said upper-surface sub-assembly (11) of an arrangement (10, 15) are manufactured on one and the same mandrel (20, 30) which is adapted to this arrangement (10, 15) and outside a mould for manufacturing said blade, said lower-surface sub-assembly (11) and said upper-surface sub-assembly (12) of an arrangement (10, 15) being manufactured by stacking segments of tape on said mandrel by a fibre placement method with the aid of a placement head (53), said placement head (53) winding each segment of tape of the lower-surface sub-assembly around a root axis (AX1, AX2) by applying said segment over the lower-surface working surface (21, 31), said placement head (53) winding each segment of tape of the upper-surface sub-assembly around a root axis (AX1, AX2) by laying said segment on the upper-surface working surface,
- during a heating step, each arrangement (10, 15) is heated on its mandrel (20, 30).

2. A method according to Claim 1,
**characterised in that** at least one mandrel (20, 30) is a removable mandrel formed with the aid of equipment representing an internal volume of a spar, said mandrel being removed following said heating step.

3. A method according to any one of Claims 1 to 2,
**characterised in that** at least one mandrel (20, 30) is a non-removable mandrel formed of a fastening bush (41), a root wedge (42) surrounding said fastening bush, and a filling material (43) of a blade.

4. A method according to any one of Claims 1 to 3,
**characterised in that** the mandrel is arranged on equipment (56) joined to a turning gear (60), said turning gear (60) bringing about a rotation of the mandrel during the manufacturing step.

5. A method according to any one of Claims 1 to 4,
**characterised in that**, during the manufacturing step, said hanks are manufactured one after another by arranging all the segments of a hank on a mandrel before placing the segments of another hank.

6. A method according to any one of Claims 1 to 5,
**characterised in that** at least one segment (72) of tape of a sub-assembly in the working zone covers another segment (71) of the sub-assembly over a decreasing chord width (73).

7. A method according to any one of Claims 1 to 6,
**characterised in that**, at least one segment (74) of tape of a sub-assembly extending span-wise starting from said root axis over a length referred to as "first length (L1)", at least one other segment (75) extends span-wise starting from said root axis over a length referred to as "second length (L2)" which is different from the first length (LI) in order to impart a decreasing thickness to the sub-assembly.

8. A method according to any one of Claims 1 to 7,
**characterised in that**, said spar comprising an arrangement referred to as "trailing-edge arrangement (15)", a mandrel referred to as "trailing-edge mandrel (30)" is defined which is provided with a lower-surface working surface (31) and an upper-surface working surface (32) which are separated from one another vertically.

9. A method according to any one of Claims 1 to 8,
**characterised in that**, said spar comprising an arrangement referred to as "leading-edge arrangement (10)", a mandrel referred to as "leading-edge mandrel (20)" is defined which is provided with a lower-surface working surface (21) and an upper-surface working surface (22) which join to form a point (28).

10. A manufacturing method according to Claim 9,
**characterised in that** said leading-edge mandrel (20) has:
- an upper-surface working surface (22) provided transversely with an outer upper-surface zone (224) and an inner upper-surface zone (223) which are separated vertically by an upper-surface step (226),
- a lower-surface working surface (21) provided transversely with an outer lower-surface zone (222) and an inner lower-surface zone (221) which are separated vertically by a lower-surface step (225), the inner lower-surface zone (221) and the inner upper-surface zone (223) joining to form said point (28).

11. A manufacturing method according to Claim 9,
**characterised in that** the laying of the segments of a hank of the lower-surface sub-assembly and the laying of the segments of a hank of the upper-surface sub-assembly are alternated by attaching at the level of said point (28) a strand (82) of a hank against a strand of the hank previously laid to form a leading-edge herring-bone configuration (84).

12. A method according to Claim 10,
**characterised in that** during the manufacturing step:
- a first hank (91) of the upper-surface sub-assembly is formed by arranging a plurality of segments on said mandrel (20) with the aid of said placement head (53), each segment of the first hank (91) comprising in succession a first strand (81) and also a central strand (81b) and a second strand (82), the first strand (81) being laid on the outer upper-surface zone (224) and an upper-surface connecting zone, the central strand (81b) being laid on an upper-surface root zone, and the second strand (82) being laid on the upper-surface connecting zone and the inner upper-surface zone (223), an upper-surface portion (227) of the outer upper-surface zone (224) opening onto the upper-surface step (226) not being covered by the first strand (81), the second strand (82) projecting transversely from the inner upper-surface zone (223),
- a second hank (92) of the lower-surface sub-assembly (11) is formed by arranging a plurality of segments on said mandrel with the aid of said placement head (53), each segment of the second hank comprising in succession a third strand (83) and also a central strand (83b) and a fourth strand (84), the third strand (83) being laid on the outer lower-surface zone (222) and a lower-surface connecting zone, the central strand (83b) being laid on a lower-surface root zone, the fourth strand (84) being laid on the lower-surface connecting zone and the inner lower-surface zone (221), a lower-surface portion (228) of the outer lower-surface zone (222) opening onto the lower-surface step (225) not being covered by the third strand (83), the fourth strand (84) projecting transversely from the inner lower-surface zone (221) in order to bear against an edge of the first strand (81),
- a third hank (93) of the upper-surface sub-assembly is formed by arranging a plurality of segments on said mandrel with the aid of said placement head, each segment of the third hank comprising in succession a fifth strand (85) and also a central strand (85b) and a sixth strand (86), the fifth strand (85) being laid jointly on said upper-surface portion (227) and partially on the second strand (82) in the working part then covering the upper-surface connecting zone in the working zone, the central strand (85b) being laid on the upper-surface root zone, and the sixth strand (86) being laid on the upper-surface connecting zone then in the working zone on the second strand (82) and on an edge of the fourth strand (84), the sixth strand (86) projecting transversely from the fourth strand (84),
- a fourth hank (94) of the lower-surface sub-assembly is formed by arranging a plurality of segments on said mandrel with the aid of said placement head, each segment of the fourth hank (94) comprising in succession a seventh strand (87) and also a central strand (87b) and an eighth strand (88), the seventh strand (87) being laid jointly on said lower-surface portion (228) and partially on the fourth strand (84) in the working part then covering the lower-surface connecting zone in the working zone, the central strand (87b) being laid on the lower-surface root zone, and the eighth strand (88) being laid on the lower-surface connecting zone then in the working zone on the fourth strand (84) and against an edge of the sixth strand (86).

13. A method according to Claim 12,
**characterised in that** that portion (821) of the first hank (91) which is laid on said inner upper-surface zone (223) is flush with the outer upper-surface zone (224), and that portion (841) of the second hank (92) which is laid on said inner lower-surface zone (221) is flush with the outer lower-surface zone (222).

14. A method according to Claim 1,
**characterised in that**, during said manufacturing step, said placement head winding each segment of tape of the lower-surface sub-assembly around a root axis by laying said segment over a first working wall of the lower-surface working surface, a first connecting wall of the lower-surface working surface, the root wall, a second connecting wall of the lower-surface working surface, and a second working wall of the lower-surface working surface, said placement head winding each segment of tape of the upper-surface sub-assembly around a root axis by laying said segment over a first working wall of the upper-surface working surface, a first connecting wall of the upper-surface working surface, the root wall, a second connecting wall of the upper-surface working surface and a second working wall of the upper-surface working surface.

15. A method for manufacturing a blade (1),
**characterised in that**:
- a spar (5) is manufactured by applying the method according to any one of Claims 1 to 14,
- a mould (95) of the blade is manufactured,
- said spar (5) is arranged in said mould (95),
- said mould (95) is arranged in a heating means (96) for heating said blade (1).

16. A blade (1) provided with at least one fastening bush and a spar, said spar (5) comprising an arrangement (10, 15) wound around said fastening bush, this arrangement comprising a lower-surface sub-assembly and an upper-surface sub-assembly, this arrangement extending span-wise, comprising in succession a root zone (Z1) at the level of the fastening bush, a connecting zone (Z2) then a working zone (Z3),
**characterised in that** at least one section referred to as "connecting section" of said arrangement in the connecting zone is lozenge-shaped, said lower-surface sub-assembly being in a V-shape and said upper-surface sub-assembly being in an inverted V-shape in said connecting section.

17. A blade according to Claim 16,
**characterised in that** each section referred to as "root section" of said arrangement in the root zone comprises at least one rectangular slice extending in elevation along its length, said root axis being a vertical axis substantially orthogonal to the plane of extension span-wise (PI) of the spar.

18. A blade according to Claim 16,
**characterised in that** at least one section of a leading-edge arrangement (10) is in a C-shape in the working zone (Z3), a trailing-edge arrangement (15) extending this C-shape at the level of an upper surface and a lower surface of the blade.
